# EUROPÄISCHE PATENTSCHRIFT

(11) **EP 1 169 215 B1**
(45) Veröffentlichungstag und Bekanntmachung des Hinweises auf die Patenterteilung: **23.10.2002**
(21) Anmeldenummer: 00918557.0
(22) Anmeldetag: 11.04.2000
(51) Int. Cl.: B62M 3/08

(54) **PEDAL FÜR EIN FAHRRAD**
BICYCLE PEDAL
PEDALE DE BICYCLETTE

(30) Priorität: 12.04.1999 AT 63799
(43) Veröffentlichungstag der Anmeldung: 09.01.2002
(73) Patentinhaber: Hilber, Gerhard, 6380 St. Johann in Tirol (AT)
(72) Erfinder: Hilber, Gerhard, 6380 St. Johann in Tirol (AT)
(74) Vertreter: Hübscher, Helmut, Dipl.-Ing.
(86) Internationale Anmeldenummer: AT0000087
(87) Internationale Veröffentlichungsnummer: WO00061428

(56) Entgegenhaltungen:
- US-A- 5 628 710

## Beschreibung

### Technisches Gebiet

Die Erfindung bezieht sich auf ein Pedal für ein Fahrrad mit einem auf einer Pedalachse drehbar gelagerten Pedalkörper, der auf einem Träger um eine Querachse zur Pedalachse begrenzt verschwenkbar gelagert ist, wobei der Träger aus einer auf der Pedalachse drehbar gelagerten Hülse besteht, die einander diametral gegenüberliegende, radiale Ansätze für die Querachse aufweist.

### Stand der Technik

Die zur Betätigung eines Tretkurbelantriebes für ein Fahrrad benötigten Pedale weisen einen auf einer Pedalachse drehbaren Pedalkörper auf, der entweder eine Trittfläche für den Fuß eines Radfahrers bildet oder eine Bindung zur lösbaren Kupplung mit einem Schuh trägt. Da die mit einem Gewindeansatz in eine Gewindebohrung der Tretkurbeln eingeschraubten Pedalachsen die Tretkurbelumdrehungen mitmachen, müssen die Pedalkörper auf der Pedalachse drehbar gelagert werden, weil sich der Pedalkörper der Fuß- bzw. Schuhneigung während eines Tretkurbelumlaufes anpassen muß. Trotz dieser freien Drehbeweglichkeit des Pedalkörpers um die Pedalachse kommt es zu ergonomisch ungünstigen Fußbelastungen, weil einerseits nicht mit einer Beinbewegung ausschließlich in einer zur Pedalachse senkrechten Ebene gerechnet werden kann und anderseits die anatomischen Gegebenheiten des jeweiligen Fahrradbenützers einen Kraftangriff am Pedal bedingen, der von einer Trittflächenormalen abweicht, so daß damit verbundene Kippmomente über die Fuß- bzw. Beinmuskulatur ausgeglichen werden müssen.

Um hier Abhilfe zu schaffen, ist es bekannt (US 5 628 710 A), den Pedalkörper auf einem Träger um eine Querachse zur Pedalachse begrenzt verschwenkbar zu lagern. Nachteilig bei diesem bekannten Pedal ist, daß der Anschlag des Pedalkörpers gegenüber dem Träger, der aus einer auf der Pedalachse drehbar gelagerten Hülse besteht, durch zwei ober- und unterhalb der Hülse verlaufende Querstege des Pedalkörpers begrenzt wird, die in der unverschwenkten, neutralen Stellung des Pedalkörpers mit radialem Abstand von der Hülse verlaufen, um eine entsprechende Freistellung zum Verschwenken des Pedalkörpers um die Querachse nach beiden Seiten zu ermöglichen. Dies bedeutet, daß der Pedalkörper mit einer vergleichsweise großen Bauhöhe ausgeführt werden muß, die außerdem ein entsprechendes Mehrgewicht mit sich bringt.

Schließlich ist es bekannt (US 5 449 332 A), den Pedalkörper aus einem in üblicherweise auf der Pedalachse drehbar gelagerten Grundkörper zu bilden, auf dem ein Auftritt um eine Querachse verschwenkbar gelagert ist, wobei zur federnden Abstützung des Auftrittes zwei elastische Abstützungen beidseits der Querachse vorgesehen sind. Eine solche Pedalkonstruktion ist allerdings mit einer noch größeren Bauhöhe verbunden.

### Darstellung der Erfindung

Der Erfindung liegt somit die Aufgabe zugrunde, ein Pedal für ein Fahrrad der eingangs geschilderten Art so auszugestalten, daß eine niedrige Bauhöhe bei vergleichsweise geringem Gewicht gewährleistet wird.

Die Erfindung löst die gestellte Aufgabe dadurch, daß die Hülse einen über die Pedalachse axial vorragenden Anschlag für den Pedalkörper trägt und daß der Pedalkörper eine Aufnahmeöffnung für einen auf den axial vorragenden Anschlag der Hülse aufsteckbaren, gummielastischen Ring bildet.

Die Schwenkbegrenzung des Pedalkörpers um die Querachse durch einen über die Pedalachse axial vorragenden Anschlag des hülsenartigen Trägers bietet den Vorteil, daß hinsichtlich der Schwenkbegrenzung des Pedalkörpers um die Querachse die Drehbeweglichkeit des Trägers um die Pedalachse nicht berücksichtigt zu werden braucht. Außerdem läßt sich diese Konstruktion in einfacher Weise für eine federnde Abstützung des Pedalkörpers gegenüber dem Träger ausnützen, weil zu diesem Zweck lediglich der Pedalkörper eine Aufnahmeöffnung für einen auf den axial vorragenden Anschlag der Hülse aufsteckbaren, gummielastischen Ring aufzuweisen braucht. Im Rahmen des elastischen Federweges ergibt sich in diesem Fall die begrenzte Schwenkbeweglichkeit des Pedalkörpers um die Querachse von selbst. Durch diese Maßnahme wird bei einer geringen Bauhöhe des Pedals ein Angleichen des Pedalkörpers an die jeweilige Raumlage der Fuß- bzw. Schuhsohle zufolge der auf den Pedalkörper über den Fuß des Radfahrers ausgeübte Kraft mit dem Vorteil erreicht, daß Kippmomente weitgehend ausgeglichen werden.

### Kurze Beschreibung der Zeichnungen

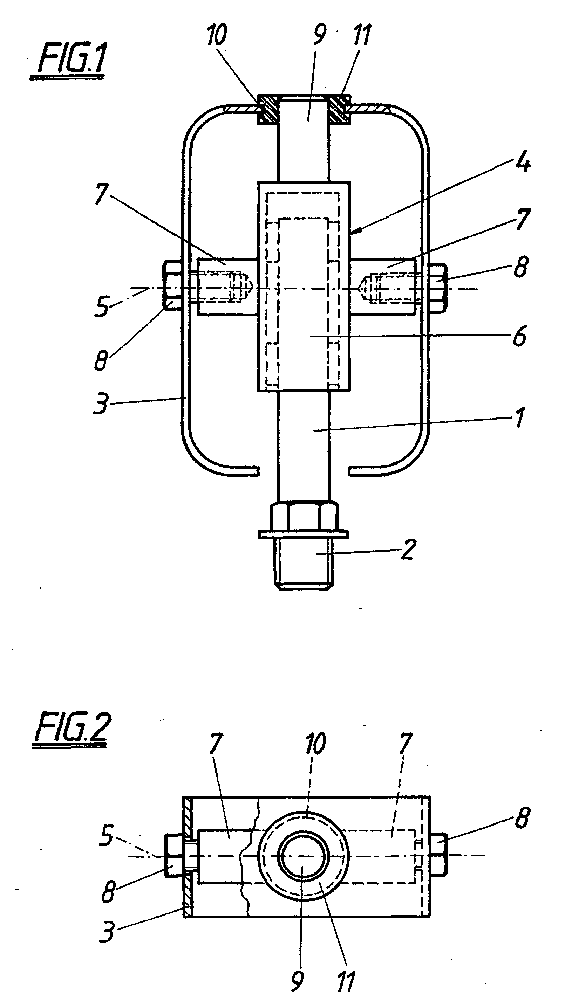

In der Zeichnung ist der Erfindungsgegenstand beispielsweise dargestellt. Es zeigen
- Fig. 1: ein erfindungsgemäßes Pedal für ein Fahrrad in einer vereinfachten Draufsicht und
- Fig. 2: dieses Pedal in einer zum Teil aufgerissenen, stirnseitigen Ansicht.

### Bester Weg zur Ausführung der Erfindung

Gemäß dem dargestellten Ausführungsbeispiel weist das Pedal eine Pedalachse 1 mit einem Gewindeansatz 2 zur Befestigung an einer Tretkurbel eines Fahrrades und einen Pedalkörper 3 auf, der auf der Pedalachse 1 drehbar gelagert ist. Im Gegensatz zu herkömmlichen Pedalen ist der Pedalkörper 3 jedoch nicht unmittelbar, sondern über einen Träger 4 auf der Pedalachse 1 gelagert, um die Möglichkeit zu schaffen, den Pedalkörper 3 zusätzlich um eine Querachse 5 zu verschwenken. Der Träger 4, der vorteilhaft aus einer auf der Pedalachse 1 drehbar gelagerten Hülse 6 besteht, weist zu diesem Zweck einander diametral gegenüberliegende, radiale Ansätze 7 auf, an denen der bügelartige Pedalkörper 3 mit Hilfe von Schrauben 8 befestigt ist, die zugleich die Querachse 5 bilden, um die der Pedalkörper 3 schwenkbar gegenüber dem Träger 4 gelagert ist. Die Hülse 6 ist über das dem Gewindeansatz 2 gegenüberliegende Ende der Pedalachse 1 hinaus verlängert und bildet im Bereich dieser Verlängerung einen axial vorragenden Anschlag 9 für den Pedalkörper 3, der den Anschlag 9 in einer Aufnahmeöffnung 10 mit allseitigem Spiel aufnimmt. Um den Pedalkörper 3 gegenüber dem Träger 4 federnd abzustützen, ist in die Aufnahmeöffnung 10 des Pedalkörpers 3 ein gummielastischer Ring 11 eingesetzt, der den Anschlag 9 umschließt, so daß die Verschwenkbarkeit des Pedalkörpers 3 um die Querachse 5 durch die Einfederung des Gummiringes 11 begrenzt wird.

Aufgrund dieser Maßnahmen kann der Pedalkörper 3, der in herkömmlicher Weise eine Trittfläche für den Fuß eines Radfahrers bilden oder eine Schuhbindung aufnehmen kann, in üblicher Weise um die Pedalachse 1 gedreht und zusätzlich um die Querachse 5 anschlagbegrenzt verschwenkt werden, um für den Fuß eine vorteilhafte, ergonomische Abstützung zu erhalten, die sich in Abhängigkeit von der jeweiligen Fußhaltung des Radfahrers selbständig einstellt, wenn die Lage der Querachse 5 zumindest angenähert im Bereich des Hauptkraftangriffes verläuft.

## Patentansprüche

1. Pedal für ein Fahrrad mit einem auf einer Pedalachse drehbar gelagerten Pedalkörper, der auf einem Träger um eine Querachse zur Pedalachse begrenzt verschwenkbar gelagert ist, wobei der Träger aus einer auf der Pedalachse drehbar gelagerten Hülse besteht, die einander diametral gegenüberliegende, radiale Ansätze für die Querachse aufweist, **dadurch gekennzeichnet, daß** die Hülse (6) einen über die Pedalachse (1) axial vorragenden Anschlag (9) für den Pedalkörper (3) trägt und daß der Pedalkörper (3) eine Aufnahmeöffnung (10) für einen auf den axial vorragenden Anschlag (9) der Hülse (6) aufsteckbaren, gummielastischen Ring (11) bildet.

## Claims

1. A pedal for a bicycle with a pedal body which is mounted rotatably on a pedal shaft and which is mounted on a support so as to have limited pivoting movement about a shaft extending transversely of the pedal shaft, the support consisting of a sleeve which is mounted rotatably on the pedal shaft and which has diametrically opposite radial projections for the transverse shaft, **characterised in that** the sleeve (6) carries a stop (9) for the pedal body (3), said stop projecting axially beyond the pedal shaft (1), and **in that** the pedal body (3) forms a receiving opening (10) for an elastomeric ring (11) which is adapted to be pushed on to the axially projecting stop (9) of the sleeve (6).

## Revendications

1. Pédale pour bicyclette avec un corps de pédale monté à rotation sur un axe de pédale, le corps de pédale étant monté avec une possibilité de pivotement limitée autour d'un axe transversal par rapport à l'axe de pédale, sur un support, le support étant formé d'une douille montée à rotation sur l'axe de pédale, la douille présentant des appendices radiaux, diamétralement opposés les uns aux autres, pour l'axe transversal, **caractérisée en ce que** la douille (6) porte une butée (9) faisant saillie axialement sur l'axe de pédale (1) pour le corps de pédale (3), et **en ce que** le corps de pédale (3) forme une ouverture de logement (10) pour une bague (11) ayant l'élasticité du caoutchouc, susceptible d'être enfichée sur la butée (9) en saillie axialement de la douille (6).
